# EUROPÄISCHE PATENTSCHRIFT

(11) **EP 1 477 711 B1**
(45) Veröffentlichungstag und Bekanntmachung des Hinweises auf die Patenterteilung: **22.07.2009**
(21) Anmeldenummer: 04010995.1
(22) Anmeldetag: 08.05.2004
(51) Int. Cl.: F16H 61/30, F15B 15/22

(54) **Schalteinrichtung**
Shifting device
Dispositif de changement de vitesse

(30) Priorität: 13.05.2003 DE 10321280
(43) Veröffentlichungstag der Anmeldung: 17.11.2004
(73) Patentinhaber: ZF Friedrichshafen AG, 88038 Friedrichshafen (DE)
(72) Erfinder: Bader, Josef, 88045 Friedrichshafen (DE)

(56) Entgegenhaltungen:
- DE-A1- 19 543 646
- DE-U1- 20 214 904
- FR-A- 1 361 134

## Beschreibung

Die Erfindung betrifft eine Schalteinrichtung nach dem Oberbegriff von Anspruch 1.

Moderne Schaltsysteme in Kraftfahrzeugen und insbesondere in pneumatisch geschalteten Nutzfahrzeuggetrieben weisen Schalteinrichtungen auf, die Schaltzylinder und Schaltkolben in den Schaltzylindern umfassen. Diese Schaltzylinder finden insbesondere für zusätzliche Hilfsgetriebe Anwendung, die in Form von Splittergetrieben oder Gruppengetrieben oder auch einer Kombination aus beiden Getrieben vorgesehen sein können. Splittergetriebe, üblicherweise einem Hauptgetriebe vorgeschaltet, unterteilen den Gangsprung zwischen zwei Gangstufen im Hauptgetriebe, während Gruppengetriebe, üblicherweise einem Hauptgetriebe nachgeschaltet, die Gesamtspreizung der Übersetzung des Hauptgetriebes erweitern. Gruppengetriebe werden dazu häufig in Form von Planetengetrieben ausgeführt.

Die Umschaltung der Hilfsgetriebe erfolgt über die im jeweiligen Schaltzylinder angeordneten Schaltkolben, der dafür über eine Schaltstange mit dem jeweils zu schaltenden Schaltelement verbunden ist. Als Schaltelemente kommen dabei üblicherweise synchronisierte Schaltelemente in Betracht. Bei den Schaltvorgängen sind möglichst kurze Synchron-Gesamtschaltzeiten anzustreben. Aus diesem Grund und zur Erreichung einer akzeptablen Kaltschaltbarkeit wird mit hohen Systemdrücken und entsprechend dimensionierten Schaltzylindern gearbeitet. Infolge dessen treten beim Anschlag des Schaltkolbens an einer festen Anschlagsfläche in dem Schaltzylinder hohe dynamische Kräfte auf, die starke Schaltgeräusche verursachen, welche als störend empfunden werden.

Die Schaltgeräusche und die hohe Anschlagskraft des Schaltkolbens sind insbesondere darauf zurückzuführen, dass der Schaltkolben während eines Synchronisierüngsvorganges des Getriebes unmittelbar vor seinem Endanschlag gesperrt wird, jedoch weiterhin mit dem vollen Druck des Druckmittels beaufschlagt wird, so dass nach dem Entsperren der Synchronisiereinrichtung mit der durch die Vorspannung erzeugten Kraft die Schaltverzahnungen aufeinandertreffen oder der Schaltkolben auf Endanschläge im Schaltzylinder auftrifft.

Neben den hohen Anschlaggeräuschen leidet unter dem heftigen Auftreffen des Schaltkolbens auch die Stand- bzw. Dauerfestigkeit von Schaltelementen, was beispielsweise zu Brüchen an der Schaltgabel oder am Schaltzylinderdeckel, zum Lösen der Schaltgabelverbindung oder zum Ausfall von Elektronikbauteilen führen kann.

Aus der Praxis sind verschiedene Möglichkeiten bekannt, den Endanschlag des Schaltkolbens im Schaltzylinder zu dämpfen.

Die DE 196 04 516 A1 der Anmelderin beschreibt eine pneumatische Schalteinrichtung für eine Bereichsgruppenschaltung und soll vollinhaltlich auch Gegenstand dieser Anmeldung sein. Die pneumatische Schalteinrichtung ist mit einem Schaltkolben versehen, der in einem Schaltzylinder zwei Arbeitskammern voneinander trennt. Der Schaltzylinder ist über Druckluftleitungen mit einem Umsteuerventil zur Steuerung eines Druckluftstromes verbunden. Zwischen dem Umsteuerventil und dem Schaltzylinder ist ein Steuerventil mit Steuerkolben zwischengeschaltet, wobei, je nach Differenzdruck zwischen den Arbeitskammern, im Schaltzylinder die Druckluftleitungen durch das Steuerventil absperrbar sind. Dabei ist am Ende eines Synchronisiervorganges die Druckluft der vom Schaltkolben mit Druck beaufschlagten Arbeitskammer des Schaltzylinders abgesperrt, und ein restliches Luftpolster bleibt darin zur Dämpfung des Endanschlages des Schaltkolbens an einer Stirn- bzw. Anschlagseite im Schaltzylinder zurück. Diese Art der Gegenbelüftung hat sich nicht ausreichend bewährt. Neben der aufwendige Ausgestaltung ist auch die Reaktionszeit der Gegenbelüftung zu lang.

Aus der DE 195 43 646 A1 der Anmelderin ist eine Schalteinrichtung mit einer pneumatischen Hilfskraft für eine Gruppenschaltung bekannt, bei der ebenfalls in einem Schaltzylinder ein Schaltkolben vorgesehen ist, der zwei Arbeitskammern voneinander trennt. In dem Schaltkolben ist ein Schieber angeordnet, der, je nach Druckbeaufschlagung, longitudinal zur Längsachse des Schaltzylinders verschiebbar ist und bei einem minimal definierten Volumen einer der Arbeitskammern zwischen dem Schaltkolben und einer entsprechenden Anschlagfläche auf diese Anschlagfläche auftrifft. Dabei verschiebt sich der Schieber in einer der Bewegungsrichtung des Schaltkolbens entgegengesetzten Richtung und lässt einen Durchfluss von Druckmittel durch den Schaltkolben von der mit Druck beaufschlagten Arbeitskammer zu der in Bewegungsrichtung des Schaltkolbens liegenden Arbeitskammer zu. Diese Schalteinrichtung ist nicht ausreichend in der Lage, die bei der Synchronisierung aufgebaute Vorspannung abzubauen, um eine effektive Dämpfung des Anschlages des Schaltkolbens zu erreichen.

Aus der FR-A-1 361 134 ist schließlich eine gattungsgemäße Schalteinrichtung für ein Kraftfahrzeug bekannt geworden, die einen mit einem Druckmittel beaufschlagten Schaltzylinder und einen im Schaltzylinder befindlichen Schaltkolben umfasst. Der Schaltkolben teilt den Schaftzylinder in zwei Arbeitskammern und weist eine Öffnung auf, die dazu geeignet ist, einen Austausch von Druckmittel zwischen den beiden Arbeitskammern zuzulassen. Im Schaltzylinder ist ein axial fixierter Bolzen vorgesehen, der durch wenigstens die eine Öffnung im Schaltkolben hindurchragt. Der Bolzen weist einen Durchmesser auf, der auf der Länge des Bolzens nicht konstant ist. Zur Bildung von Dichtstellen wirkt der Bolzen mit wenigstens der einen Öffnung im Schaltkolben zusammen.

Der Erfindung liegt die Aufgabe zugrunde, eine Schalteinrichtung vorzuschlagen, bei der die Anschlagdämpfung des Schaltkolbens verbessert ist.

Die Aufgabe wird gelöst durch eine Schalteinrichtung mit den Merkmalen des Anspruchs 1. Ausgestaltungen sind Gegenstand von Unteransprüchen.

Die erfindungsgemäße Schalteinrichtung für ein Kraftfahrzeug umfasst einen mit einem Druckmittel beaufschlagten Schaltzylinder und einen im Schaltzylinder befindlichen Schaltkolben, der den Schaltzylinder in zwei Arbeitskammern teilt. Der Schaltkolben weist wenigstens eine Öffnung auf, die dazu geeignet ist, einen Austausch von Druckmittel zwischen den beiden Arbeitskammern zuzulassen. Im Schaltzylinder ist ein axial fixierter Bolzen vorgesehen, der durch die wenigstens eine Öffnung im Schaltkolben hindurchragt. Der Bolzen weist einen Durchmesser auf, der auf der Länge des Bolzens nicht konstant ist, und er wirkt mit wenigstens der einen Öffnung im Schaltkolben zur Bildung von Dichtstellen zusammen. Dabei weist der Bolzen drei Bereiche auf, in denen der Durchmesser derart ausgebildet ist, dass er mit wenigstens der einen Öffnung im Schaltkolben eine Dichtstelle bildet.

In einer vorteilhaften Ausbildung liegen zwei der drei Bereiche an Endstellungen des Schaltkolbens und der dritte Bereich liegt zwischen diesen beiden Bereichen.

Ebenfalls eine vorteilhafte Weiterbildung der Erfindung zeigt den Durchmesser des Bolzens dergestalt, dass er von den beiden Bereichen an den Endstellungen des Schaltkolbens her zum dritten Bereich hin, beispielsweise kontinuierlich oder auch in einer anderen Form, abnimmt.

In einer besonders bevorzugten Ausführungsform weist der Schaltkolben zwei Öffnungen auf, durch die der Bolzen hindurchragt. Vorzugsweise wirkt dabei jede der beiden Öffnungen im Schaltkolben zur Bildung einer Dichtstelle jeweils entweder mit einem Bereich des Bolzens an einer Endstellung des Schaltkolbens zusammen, oder die Öffnung wirkt mit dem dritten Bereich des Schaltkolbens zusammen, der zwischen den Bereichen an den beiden Endstellungen liegt.

Besonders bevorzugt befindet sich eine Öffnung im Schaltkolben dann im dritten Bereich des Bolzen, wenn sich die Schalteinrichtung in einer Synchronisationsphase der gerade zu schaltenden Übersetzung befindet.

Die Erfindung wir anhand einer Zeichnung näher beschrieben.
Es zeigen:
- Fig. 1: den Schnitt durch eine Schalteinrichtung in einer Schaltstellung;
- Fig. 2: den Schnitt durch die Schalteinrichtung in einer Synchronisationsphase und
- Fig. 3: den Schnitt durch die Schalteinrichtungin einer zweiten Schaltstellung.

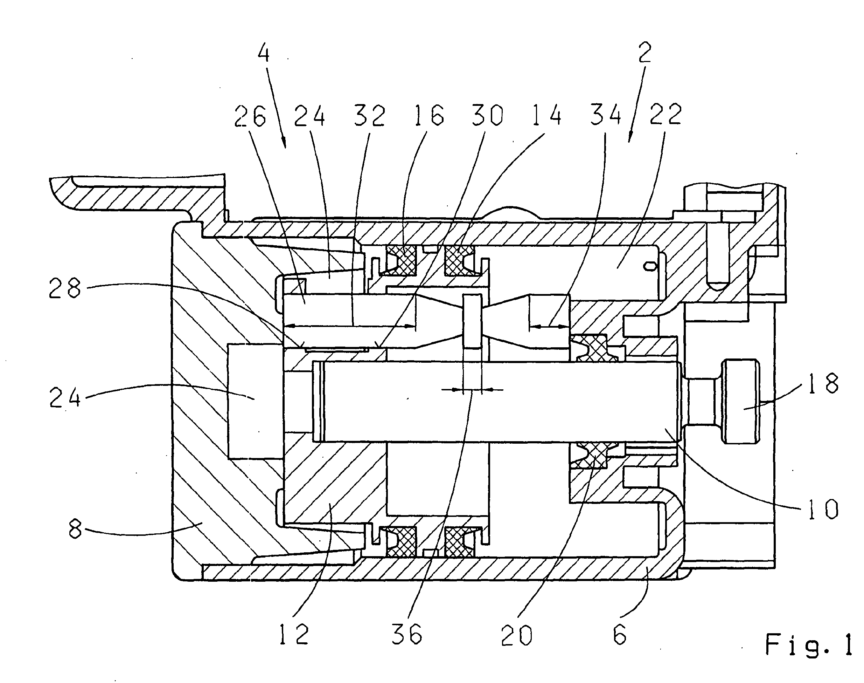

Die Fig. 1 zeigt eine Schalteinrichtung 2 für ein hier nicht näher bezeichnetes Getriebe. Die Schalteinrichtung 2 weist einen Schaltzylinder 4 auf, der von einer Schaltzylinderhülse 6 und einem Schaltzylinderdeckel 8 gebildet wird. Innerhalb des Schaltzylinders 4 ist an einer Schaltstange 10 ein Schaltkolben 12 befestigt, der mit Dichtungen 14 und 16 versehen ist, die an der Innenwand der Schaltzylinderhülse dichtend entlang gleiten. An der Schaltstange 10 ist ein Flansch 18 vorgesehen, der die Schaltstange 10 mit weiteren, hier nicht gezeigten Bauteilen der Schalteinrichtung 2 verbindet. Innerhalb der Schaltzylinderhülse 6 gleitet die Schaltstange 10 in einer Dichtung 20, die eine erste Arbeitskammer 22 gegenüber der Umgebung abdichtet. Die erste Arbeitskammer 22 wird innerhalb des Schaltzylinders 4 zwischen der Dichtung 14 am Schaltkolben 12 und der Dichtung 20 in der Schaltzylinderhülse 6 gebildet. Auf der gegenüberliegenden Seite des Schaltkolbens 12 wird zwischen dem Schaltzylinderdeckel 8 und der Dichtung 16 am Schaltkolben 12 eine zweite Arbeitskammer 24 gebildet.

Zwischen der Schaltzylinderhülse 6 und dem Schaltzylinderdeckel 8 ist ein axial fixierter Bolzen 26 angeordnet. Der Schaltkolben 12 weist zwei Öffnungen 28 und 30 auf, durch die der Bolzen 26 hindurchragt. Der Bereich des Schaltkolbens 12 zwischen den beiden Öffnungen 28 und 30 ist hier freigelegt und bildet einen Teil der Arbeitskammer 24. Der Außendurchmesser des Bolzens 26 entspricht bei der in der Fig. 1 gezeigten Endstellung des Schaltkolbens 12 in diesem Bereich 32 des Bolzens 26 der im wesentlichen dem Innendurchmesser der Öffnungen 28 und 30, so dass der Bolzen 26 und die Öffnungen 28 und 30 zusammenwirken und Dichtstellen bilden.

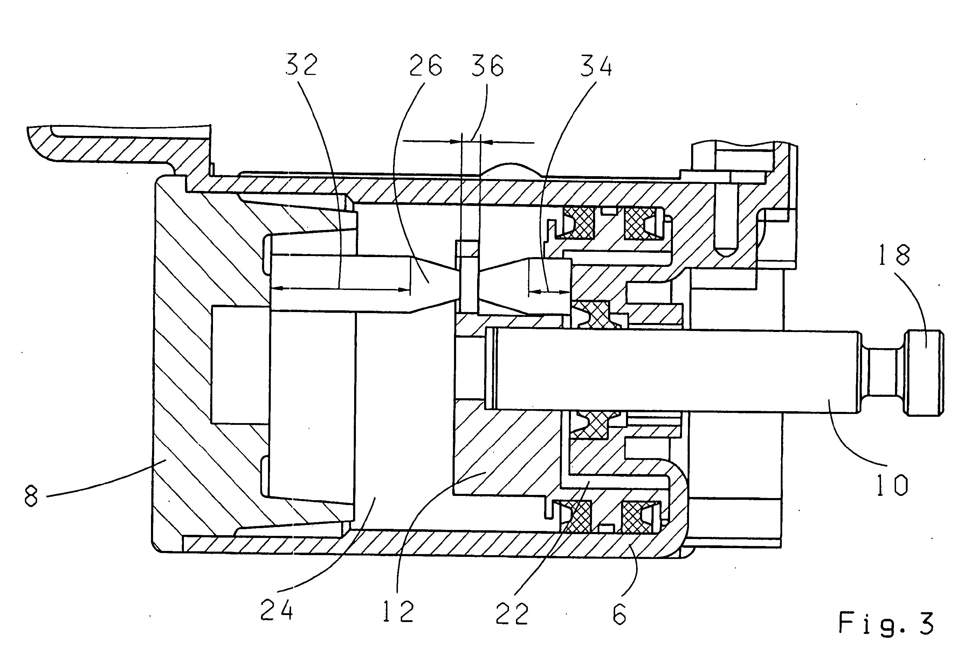

Der Bolzen 26 weist einen zweiten Bereich 34 auf, in dem der Durchmesser des Bolzens 26 de Durchmesser im Bereich 32 entspricht. In diesem Bereich 34 wirkt die Öffnung 30 des Schaltkolbens 12 mit dem Bolzen 26 zur Bildung einer Dichtstelle dann zusammen, wenn der Schaltkolben 12 im wesentlichen die andere Endstellung im Schaltzylinder 4 einnimmt, wie dies Fig. 3 zeigt. Zwischen den beiden Bereichen 32 und 34 weist der Bolzens 26 einen dritten Bereich 36 auf, in dem der Durchmesser des Bolzens 26 dem Durchmesser in den Bereichen 32 und 34 entspricht.

Zwischen dem Bereich 32 und dem Bereich 36 sowie zwischen dem Bereich 34 und dem Bereich 36 nimmt der Durchmesser des Bolzen 26 zum Bereich 36 hin kontinuierlich ab. Dadurch wirkt dieser Bereich des Bolzens 26 mit den Öffnungen 28 und 30 nicht mehr zur Bildung einer Dichtstelle zusammen und in dem Schaltzylinder vorhandenes Druckmittel kann von einer Arbeitskammer 22, 24 zur anderen Arbeitskammer 24, 22 gelangen.

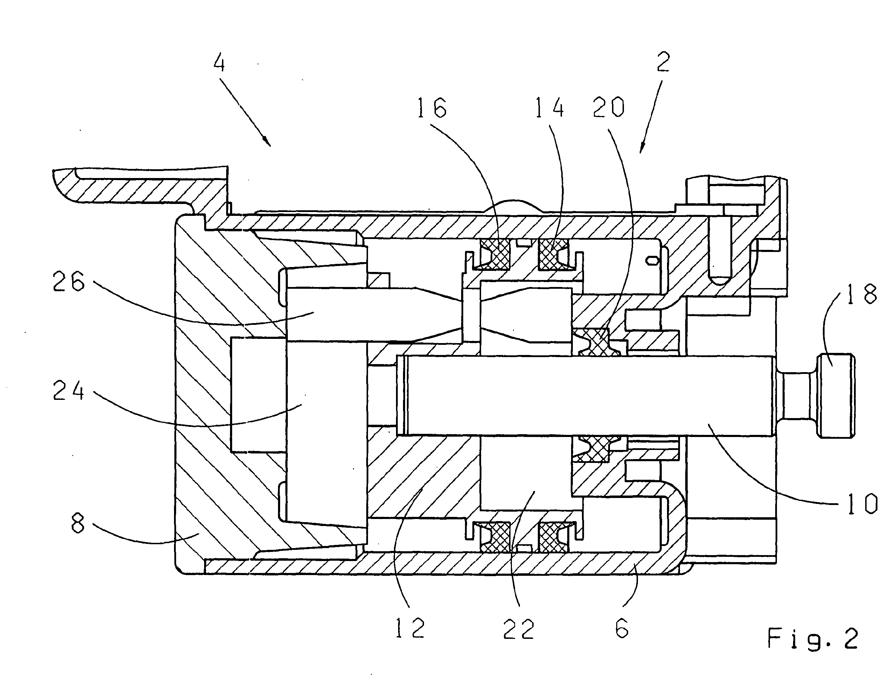

Bei einer Schaltung in der Schalteinrichtung 2 ergibt sich folgender Schaltablauf. Zunächst befindet sich der Schaltkolben 12 in seiner linken Position wie in Fig. 1 gezeigt. Zur Bewegung der Schaltstange 10 nach rechts in der Zeichnungsebene wird der Arbeitskammer 24 über eine hier nicht gezeigte Leitung Druckmittel zugeführt. Dadurch wird der Schaltkolben 12 nach rechts bewegt und bewegt damit die Schaltstange 10 nach rechts. Die Dichtungen 14 und 16 dichten den Schaltkolben in der Schaltzylinderhülle 6 ab und zunächst dichtet auch die Öffnung 30 im Bereich 32 am Bolzen 26 ab. Wenn der Schaltkolben 12 so weit nach rechts bewegt ist, dass die Öffnung 30 den Bereich 32 am Bolzen 26 verlässt, strömt Druckmittel am Bolzen 26 vorbei aus der Arbeitskammer 24 in die Arbeitskammer 22. Der Druck in der Arbeitskammer 24 auf den Schaltkolben 12 bleibt aber größer als der Druck in der Arbeitskammer 22. Der Schaltkolben 12 bewegt sich weiter nach rechts bis die Öffnung 30 in den Bereich 36 des Bolzens 26 gelangt. Diese Situation ist in der Fig. 2 gezeigt.

In dieser Situation befindet sich ein von der Schalteinrichtung 2 zu schaltendes und hier nicht gezeigtes Schaltelement in einer Synchronisationsphase. Dabei wird zur Angleichung von unterschiedlichen Drehzahlen von zu verbindenden Bauteilen eine Reibung der Bauteile aneinander hervorgerufen und eine Verbindung der Bauteile so lange unterbunden und gesperrt, bis die Angleichung der Drehzahlen erreicht ist. Danach wir die Sperrwirkung aufgehoben und die zur verbindenden Bauteile können verbunden werden.

Zur Erzielung des Reibeffektes wird der Druck im Schaltzylinder 4 in der Arbeitskammer 24 aufrecht erhalten und die gesamte Fläche des Schaltkolbens 12 wird wieder vom Druckmittel beaufschlagt, weil im Bereich 36 des Bolzens 26 die Öffnung 30 im Schaltkolben 12 wieder abgedichtet wird. Nach der Aufhebung der Sperrwirkung bewegt sich der Schaltkolben 12 weiter nach rechts und die Öffnung 30 im Schaltkolben 12 verlässt wieder den Bereich 36 am Bolzen 26. Dadurch wird die dichtende Wirkung wieder aufgehoben und Druckmittel aus der Arbeitskammer 24 kann wieder in die Arbeitskammer 22 strömen. Dieses herübergeströmte Druckmittel bildet nun einen Gegendruck für den Schaltkolben 12 in der Arbeitskammer 22, so dass der Schaltkolben 12 nicht mit seiner vollen Dynamik auf Endanschlägen anschlagen kann und mit den Schaltkolben 12 verbundene Schaltverzahnungen nicht aufeinanderprallen. Mit zunehmendem Weg nach rechts und zunehmendem Durchmesser des Bolzens 26 wird die Öffnung 30 wieder mehr und mehr vom Bolzen 26 verschlossen, so dass in der verbleibenden Arbeitskammer 22 ein Puffer aus Druckmittel bestehen bleibt und der Schaltkolben 12 seine rechte Endstellung im Bereich 34 des Bolzens 26 gedämpft einnimmt. Diese rechte Endstellung des Schaltkolbens 12 ist in der Fig. 3 gezeigt.

Bei der umgekehrten Schaltbewegung vollzieht sich der Schaltablauf entsprechend, wobei zunächst die Arbeitskammer 22 mit Druckmittel beaufschlagt wird und anschließend während der Synchronisationsphase wieder die Öffnung 30 am Schaltkolben 26 mit dem Bereich 36 am Bolzen 26 zur Bildung der Dichtstelle zusammenwirkt.

### Bezugszeichen

- 2: Schalteinrichtung
- 4: Schaltzylinder
- 6: Schaltzylinderhülse
- 8: Schaltzylinderdeckel
- 10: Schaltstange
- 12: Schaltkolben
- 14: Dichtung
- 16: Dichtung
- 18: Flansch
- 20: Dichtung
- 22: Arbeitskammer
- 24: Arbeitskammer
- 26: Bolzen
- 28: Öffnung
- 30: Öffnung
- 32: Bereich
- 34: Bereich
- 36: Bereich

## Patentansprüche

1. Schalteinrichtung (2) für ein Kraftfahrzeug, die einen mit einem Druckmittel beaufschlagten Schaltzylinder (4) und einen im Schaltzylinder (4) befindlichen Schaltkolben (12) umfasst, der den Schaltzylinder (4) in zwei Arbeitskammem (22, 24) teilt und der eine Öffnung (30) aufweist, die dazu geeignet ist, einen Austausch von Druckmittel zwischen den beiden Arbeitskammern (22, 24) zuzulassen, wobei im Schaltzylinder (4) ein axial fixierter Bolzen (26) vorgesehen ist, der durch wenigstens die eine Öffnung (30) im Schaltkolben (12) hindurchragt und der einen Durchmesser aufweist, der auf der Länge des Bolzens (26) nicht konstant ist und der mit wenigstens der einen Öffnung (30) im Schaltkolben (12) zur Bildung von Dichtstellen zusammenwirkt, **dadurch gekennzeichnet, dass** der Bolzen (26) drei Bereiche (32, 34, 36) aufweist, in denen der Durchmesser derart ausgebildet ist, dass er mit wenigstens der einen Öffnung (30) im Schaltkolben (12) eine Dichtstelle bildet.

2. Schalteinrichtung (2) nach Anspruch 1, **dadurch gekennzeichnet , dass** zwei (32,34) der drei Bereiche (32, 34, 36) an Endstellungen des Schaltkolbens (12) vorliegen und dass der dritte Bereich (36) zwischen diesen beiden Bereichen (32, 34) liegt.

3. Schalteinrichtung (2) nach Anspruch 1 oder 2, **dadurch gekennzeichnet, dass** der Durchmesser des Bolzens (26) von den beiden Bereichen (32, 34) an den Endstellungen des Schaltkolbens (12) her zum dritten Bereich (36) hin kontinuierlich abnimmt.

4. Schalteinrichtung (2) nach Anspruch 1, **dadurch gekennzeichnet , dass** der Schaltkolben (12) zwei Öffnungen (28, 30) aufweist, durch die der Bolzen (26) hindurchragt.

5. Schalteinrichtung (2) nach Anspruch 4, **dadurch gekennzeichnet, dass** jede der beiden Öffnungen (28, 30) im Schaltkolben (12) zur Bildung einer Dichtstelle jeweils entweder mit einem Bereich (32, 34) des Bolzens (26) an einer Endstellung des Schaltkolbens (12) oder dem dritten Bereich (36) zwischen den beiden Bereichen (32, 34) an den Endstellungen des Schaltkolbens zusammenwirkt.

6. Schalteinrichtung (2) nach einem der Ansprüche 1 bis 5, **dadurch gekennzeichnet, dass** sich eine Öffnung (28, 30) im Schaltkolben (12) im dritten Bereich (36) des Bolzen (12) befindet wenn sich die Schalteinrichtung (2) in einer Synchronisationsphase befindet.

## Claims

1. Shifting device (2) for a motor vehicle, which shifting device (2) comprises a shifting cylinder (4) which is loaded with a pressure medium and a shifting piston (12) which is situated in the shifting cylinder (4), divides the shifting cylinder (4) into two work chambers (22, 24) and has an opening (30) which is suitable for permitting an exchange of pressure medium between the two work chambers (22, 24), an axially fixed pin (26) being provided in the shifting cylinder (4), which axially fixed pin (26) protrudes through at least the one opening (30) in the shifting piston (12) and has a diameter which is not constant along the length of the pin (26) and interacts with at least the one opening (30) in the shifting piston (12) to form sealing points, **characterized in that** the pin (26) has three regions (32, 34, 36), in which the diameter is configured in such a way that it forms a sealing point with at least the one opening (30) in the shifting piston (12).

2. Shifting device (2) according to Claim 1, **characterized in that** two (32, 34) of the three regions (32, 34, 36) are present at end positions of the shifting piston (12), and **in that** the third region (36) lies between these two regions (32, 34).

3. Shifting device (2) according to Claim 1 or 2, **characterized in that** the diameter of the pin (26) decreases continuously from the two regions (32, 34) at the end positions of the shifting piston (12) towards the third region (36).

4. Shifting device (2) according to Claim 1, **characterized in that** the shifting piston (12) has two openings (28, 30), through which the pin (26) protrudes.

5. Shifting device (2) according to Claim 4, **characterized in that** each of the two openings (28, 30) in the shifting piston (12) interacts, in order to form a sealing point, in each case either with one region (32, 34) of the pin (26) at an end position of the shifting piston (12) or the third region (36) between the two regions (32, 34) at the end positions of the shifting piston.

6. Shifting device (2) according to one of Claims 1 to 5, **characterized in that** an opening (28, 30) in the shifting piston (12) is situated in the third region (36) of the pin (12) when the shifting device (2) is situated in a synchronization phase.

## Revendications

1. Dispositif de changement de vitesse (2) pour un véhicule automobile, qui comprend un cylindre de changement de vitesse (4) sollicité par un fluide sous pression et un piston de changement de vitesse (12) se trouvant dans le cylindre de changement de vitesse (4), qui divise le cylindre de changement de vitesse (4) en deux chambres de travail (22, 24) et présente une ouverture (30), qui est prévue pour permettre un échange de fluide sous pression entre les deux chambres de travail (22, 24), un boulon fixé axialement (26) étant prévu dans le cylindre de changement de vitesse (4), lequel traverse au moins ladite ouverture (30) dans le piston de changement de vitesse (12) et présente un diamètre qui n'est pas constant sur la longueur du boulon (26) et qui coopère avec au moins ladite ouverture (30) dans le piston de changement de vitesse (12) pour former des zones d'étanchéité, **caractérisé en ce que** le boulon (26) présente trois régions (32, 34, 36) dans lesquelles le diamètre est réalisé de telle sorte qu'il forme une zone d'étanchéité avec au moins ladite ouverture (30) dans le piston de changement de vitesse (12).

2. Dispositif de changement de vitesse (2) selon la revendication 1, **caractérisé en ce que** deux (32, 34) des trois régions (32, 34, 36) se situent en des positions extrêmes du piston de changement de vitesse (12), et **en ce que** la troisième région (36) est située entre ces deux régions (32, 34).

3. Dispositif de changement de vitesse (2) selon la revendication 1 ou 2, **caractérisé en ce que** le diamètre du boulon (26) diminue en continu depuis les deux régions (32, 34) aux positions extrêmes du piston de changement de vitesse (12) vers la troisième région (36).

4. Dispositif de changement de vitesse (2) selon la revendication 1, **caractérisé en ce que** le piston de changement de vitesse (12) présente deux ouvertures (28, 30) à travers lesquelles passe le boulon (26).

5. Dispositif de changement de vitesse (2) selon la revendication 4, **caractérisé en ce que** chacune des deux ouvertures (28, 30) dans le piston de changement de vitesse (12) coopère en vue de former une zone d'étanchéité à chaque fois soit avec une région (32, 34) du boulon (26) à une position extrême du piston de changement de vitesse (12), soit avec la troisième région (36) entre les deux régions (32, 34) aux positions extrêmes du piston de changement de vitesse.

6. Dispositif de changement de vitesse (2) selon l'une quelconque des revendications 1 à 5, **caractérisé en ce qu'**une ouverture (28, 30) se trouve dans le piston de changement de vitesse (12) dans la troisième région (36) du piston de changement de vitesse (12) lorsque le dispositif de changement de vitesse (2) se trouve dans une phase de synchronisation.
